# EUROPEAN PATENT APPLICATION

(11) **EP 3 594 045 A1**
(43) Date of publication of application: **15.01.2020**
(21) Application number: 18763734.3
(22) Date of filing: 09.03.2018
(51) Int. Cl.: B60L 3/00, B60L 9/18, B60L 15/20

(54) **DRIVE CONTROL DEVICE**

(30) Priority: 10.03.2017 JP 2017046153
(71) Applicant: NTN Corporation, Osaka-shi, Osaka 550-0003 (JP)
(72) Inventor: KANDA, Takeshi, Iwata-shi Shizuoka 438-8510 (JP)
(74) Representative: Maikowski & Ninnemann Patentanwälte Partnerschaft mbB
(86) International application number: PCT/JP2018/009260
(87) International publication number: WO 2018/164268

(57) **Abstract**

Provided is a drive control device (20) for controlling a motor (6) of a vehicle including the motor (6) for driving the vehicle, a speed reducer (7) for reducing the speed of rotation of the motor (6) to transmit the reduced rotation to a wheel, and a mechanism for supplying lubricating oil to the motor (6) and the speed reducer (7). The device (20) includes an oil temperature sensor (Sa) for obtaining the temperature of the lubricating oil, and a rotation speed detection module (28) for detecting the rotation speed of the motor (6). The device (20) further includes a torque limitation module (26) for limiting a torque to be generated in the motor (6), based on the obtained oil temperature and the detected rotation speed of the motor (6), when the oil temperature obtained by the sensor (Sa) is equal to or lower than a predetermined temperature.

## Description

### CROSS REFERENCE TO THE RELATED APPLICATION

This application is based on and claims Convention priority to Japanese patent application No. 2017-046153, filed March 10, 2017, the entire disclosure of which is herein incorporated by reference as a part of this application.

### BACKGROUND OF THE INVENTION

### (Field of the Invention)

The present invention relates to a drive control device in which necessary torque limitation is performed and loads on machine elements such as a bearing and a gear is reduced at low temperature.

### (Description of Related Art)

An in-wheel motor drive device including an electric motor, a wheel bearing, and a speed reducer has been proposed (Patent Document 1). The speed reducer described in Patent Document 1 is lubricated with lubricating oil that is pressure-fed by an oil pump. In the invention described in Patent Document 1, when the temperature of the lubricating oil or the temperature of the electric motor is equal to or lower than a threshold value, an output limitation means limits the output from the electric motor.

### [Related Document]

### [Patent Document]

[Patent Document 1] JP Laid-open Patent Publication No. 2014-93845

### SUMMARY OF THE INVENTION

In the prior art, a torque that the motor generates is limited through determination of a limited torque value based only on the oil temperature or the motor temperature. In such case, for example, on a downslope or the like, the electric motor is sometimes rotated at a high speed even with a limited torque. If the electric motor is rotated at a high speed and oil supply is not sufficient, a malfunction can occur in a portion of the bearing or the speed reducer. If a small limited torque value, i.e., a large torque limitation amount, which is suitable for a downslope, is set, a possibility such as significant deterioration of accelerating performance or incapability of running upslope, arises.

An object of the present invention is to provide a drive control device in which the minimal necessary acceleration performance and upslope-running performance is ensured and loads on a speed reducer and the like at low temperature is reduced.

In the following description, the reference characters in the embodiments are used for convenience sake in order to facilitate the understanding.

A drive control device according to the present invention is a drive control device 20 for controlling a motor 6 of a vehicle, the vehicle including the motor 6 for driving the vehicle, a speed reducer 7 for reducing a speed of rotation of the motor 6 to transmit the reduced rotation to a wheel 2, and an oil supply mechanism Jk for suppling lubricating oil to the motor 6 and the speed reducer 7,
the drive control device 20 including:
an oil temperature sensor Sa configured to obtain a temperature of the lubricating oil;
a rotation speed detection module 28 configured to detect a rotation speed of the motor 6; and
a torque limitation module 26 configured to limit a torque to be generated in the motor 6, based on the oil temperature obtained by the oil temperature sensor Sa and the rotation speed of the motor 6 detected by the rotation speed detection module 28, when the oil temperature obtained by the oil temperature sensor Sa is equal to or lower than a predetermined temperature.

The predetermined temperature is any temperature that is determined in accordance with designing or the like, and is determined by obtaining an appropriate temperature through, for example, an experiment and/or a simulation.

In this disclosure, the "rotation speed" has the same meaning as the number of rotations per unit time. Hereinafter, the number of rotations per unit time is sometimes referred to simply as the "number of rotations".

In this configuration, the oil temperature sensor Sa obtains the temperature of the lubricating oil by, for example, sensing or estimation. The rotation speed detection module 28 detects the rotation speed of the motor 6. The torque limitation module 26 determines whether or not the obtained oil temperature is equal to or lower than the predetermined temperature. If the oil temperature is determined to be higher than the predetermined temperature, a motor torque is outputted in accordance with the manipulation amount of an accelerator pedal or the like. If the oil temperature is determined to be equal to or lower than the predetermined temperature, the torque limitation module 26 limits the torque of the motor 6 based on the obtained oil temperature and the detected rotation speed of the motor 6. By thus limiting the torque of the motor 6 in consideration not only of the oil temperature but also of the rotation speed of the motor, the following effects are obtained. When the temperature is low, i.e., when the viscosity of the lubricating oil is high, if the rotation speed of the motor 6 is undesirably increasing, the limited torque value is made small so that increase in the rotation speed of the motor can be suppressed. In this way, a problem such as excessive wear can be prevented from occurring on the speed reducer or the like. In addition, since the torque of the motor 6 is limited finely in consideration not only of the oil temperature but also of the rotation speed of the motor, the minimal necessary acceleration performance and upslope-running performance can be ensured.

The drive control device may further include a storage section 30 configured to store a map Mp in which a value related to limitation on the torque to be generated in the motor 6 is set with respect to an oil temperature and a rotation speed, wherein the torque limitation module 26 may extract, from the map Mp, a limited torque value for the oil temperature obtained by the oil temperature sensor Sa and the rotation speed of the motor 6 detected by the rotation speed detection module 28, the limited torque value limiting the torque to be generated in the motor 6. The map Mp is determined through an experiment and/or a simulation.

In this configuration, the torque limitation module 26 can easily extract the limited torque value by searching the map Mp with the oil temperature and the rotation speed of the motor. The limited torque value enables a motor torque to be limited.

The motor 6, a wheel bearing 4 rotationally supporting the wheel 2, and the speed reducer 7 for reducing the speed of the rotation of the motor 6 to transmit the reduced rotation to the wheel bearing 4, may form an in-wheel motor drive device IWM. The in-wheel motor drive device IWM is at least partially exposed to the outside of the vehicle and is close to the ground. As such, the in-wheel motor drive device IWM is used under severer condition, and thus the oil temperature more easily becomes low, than in a motor drive device of a so-called on-board type. Even in a vehicle including such in-wheel motor drive devices IWM, a problem such as excessive wear can be prevented from occurring on the speed reducer or the like by limiting the torque of the motor 6 in accordance with the oil temperature and the rotation speed of the motor. Also, the minimal necessary acceleration performance and upslope-running performance can be ensured.

A drive control system according to the present invention may be a drive control system including two or more drive control devices 20 each of which is described above, the vehicle being mounted with the two or more drive control devices 20, in the vehicle left and right wheels being driven independently, wherein the two or more drive control devices 20 may share, or may separately have, the torque limitation module 26, and the shared torque limitation module 26 or at least one of the separate torque limitation module 26 may extract limited torque values, the limited torque values limiting the torques to be generated in the respective motors 6 for left and right drive wheels 2, and may set a limited torque value that is smaller between the limited torque values, as a limited torque value for both motors for the respective left and right drive wheels 2. In this case, no difference is generated between torques that are to be applied to the left and right wheels of the vehicle, whereby the straight-running stability and the like of the vehicle is improved.

A drive control system according to the present invention may be a drive control system including two or more drive control devices 20 each of which is described above, the vehicle being mounted with the two or more drive control devices 20, in the vehicle left and right wheels being driven independently, wherein the two or more drive control devices 20 may share, or may separately have, the torque limitation module 26, and the shared torque limitation module 26 or at least one of the separate torque limitation module 26 may extract a limited torque value for an oil temperature that is lower between oil temperatures obtained by the respective oil temperature sensors Sa of the drive control devices 20 on the left and right, and a rotation speed that is higher between rotation speeds detected by the respective rotation speed detection modules 28 of the drive control devices 20 on the left and right, and may set the extracted limited torque value as a limited torque value for both motors 6 for respective left and right drive wheels 2. In this case, the extraction of the limited torque value is simplified, which reduces an arithmetic processing load on the drive control devices 20.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a block diagram of a conceptual configuration, in a plan view, of an electric vehicle mounted with a drive control device according to any of first to third embodiments of the present invention;
Fig. 2 is a sectional view of an in-wheel motor drive device of the electric vehicle in Fig. 1;
Fig. 3 is an axial view of a pump of an oil supply mechanism of the in-wheel motor drive device in Fig. 1;
Fig. 4 is a block diagram of a control system of the drive control device in Fig. 1;
Fig. 5 is a graph indicating the relationship between the torque and the rotation speed of a motor of the electric vehicle in Fig. 1;
Fig. 6 is a flowchart indicating a process by the drive control device according to the first embodiment;
Fig. 7 is a flowchart indicating a process by the drive control device according to the second embodiment of the present invention;
Fig. 8 is a flowchart indicating a process by the drive control device according to the third embodiment of the present invention;
Fig. 9 is a graph indicating the relationship between the torque and the rotation speed of a motor of an electric vehicle mounted with a drive control device according to an embodiment;
Fig. 10 is a block diagram of a conceptual configuration, in a plan view, of an electric vehicle mounted with a drive control device according to an embodiment; and
Fig. 11 is a block diagram of a conceptual configuration, in a plan view, of an electric vehicle mounted with a drive control device according to an embodiment.

### DESCRIPTION OF EMBODIMENTS

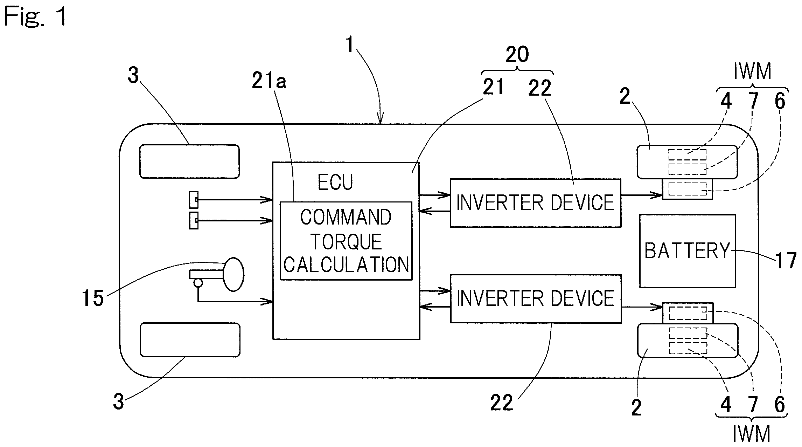

An embodiment of the present invention will be described with reference to Fig. 1 to Fig. 6.

### <Conceptual Configuration of Electric Automobile (Vehicle)>

Fig. 1 is a block diagram of a conceptual configuration, in a plan view, of an electric vehicle mounted with a drive control device according to this embodiment. This electric vehicle is a four-wheel vehicle or an automobile having drive wheels 2 and 2, which are left and right rear wheels of a vehicle body 1, and having driven wheels 3 and 3 which are left and right front wheels of the vehicle body 1. The front wheels 3 and 3 serve as steered wheels. The left and right drive wheels 2 and 2 are driven by respective independent traction motors 6. Each of the motors 6 is a part of an in-wheel motor drive device IWM, which is described later. Each of the wheels 2 and 3 is provided with a brake not shown. The left and right front wheels 3 and 3 can be turned via turning mechanisms not shown, and are steered with a steering device 15 such as a steering wheel.

### <Schematic Configuration of In-Wheel Motor Drive Device IWM>

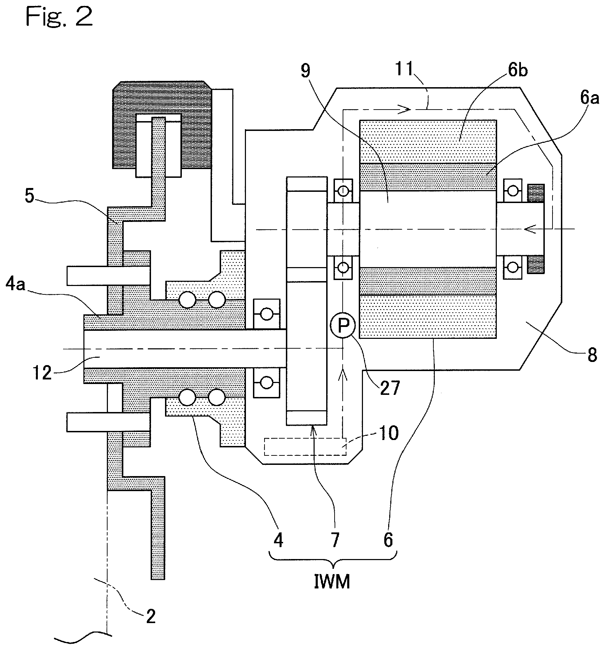

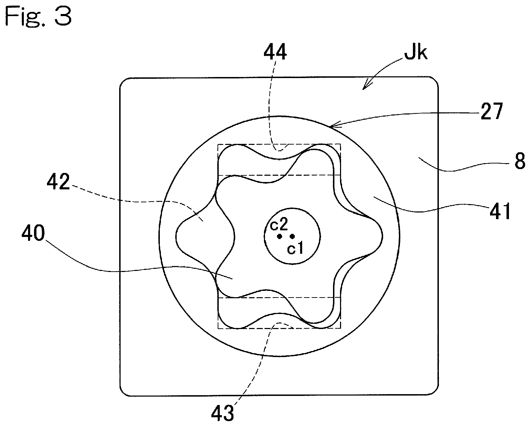

As shown in Fig. 2, each in-wheel motor drive device IWM includes the corresponding motor 6, a speed reducer 7, a wheel bearing 4, and an oil supply mechanism Jk (Fig. 3), which is described later. These components are partially or entirely disposed in the corresponding wheel. Rotation of the motor 6 is transmitted to the drive wheel 2 via the speed reducer 7 and the wheel bearing 4. A brake rotor 5 composing the brake is fixed to a flange portion of a hub ring 4a of the wheel bearing 4 so that the brake rotor 5 is rotated together with the drive wheel 2. The motor 6 is, for example, an interior magnet synchronous motor in which a permanent magnet is embedded in a core portion of a rotor 6a. In the motor 6, a radial gap is formed between a stator 6b fixed to a housing 8 and the rotor 6a mounted to a rotation output shaft 9.

### <Oil Supply Mechanism>

As shown in Fig. 2 and Fig. 3, the oil supply mechanism Jk is a so-called axial oil supply mechanism for supplying, from inside the rotation output shaft 9, lubricating oil that is used for cooling the motor 6, and for lubricating and cooling the speed reducer 7. The oil supply mechanism Jk includes a pump 27, a lubricating oil accumulating portion 10, and a plurality of oil passages 11. The pump 27 and the lubricating oil accumulating portion 10 are disposed in the housing 8. The pump 27 pumps up, from the lubricating oil accumulating portion 10, lubricating oil accumulated therein to circulate through the plurality of oil passages 11.

The pump 27 is a cycloidal pump that includes: an inner rotor 40, which rotates along with rotation of an output member 12; an outer rotor 41, which is rotated so as to follow the rotation of the inner rotor 40; a pump chamber 42; a suction port 43; and an ejection port 44. The inner rotor 40 is configured to be able to rotate along with the rotation of the output member 12. When the inner rotor 40 rotates along with the rotation of the output member 12 driven by the motor 6, the outer rotor 41 is rotated so as to follow the rotation of the inner rotor 40. At this time, the inner rotor 40 and the outer rotor 41 respectively rotate about rotation centers c1 and c2, which are different from each other, so that the volume of the pump chamber 42 constantly changes. In this way, the lubricating oil accumulated in the lubricating oil accumulating portion 10 is pumped up so as to flow in from the suction port 43, and is sequentially pressure-fed from the ejection port 44 to the plurality of oil passages 11.

In this electric vehicle, when the motor 6 rotates, a portion of the lubricating oil having been pressure-fed into the rotation output shaft 9 is introduced to the motor 6 by the centrifugal force of the rotor 6a and the pressure of the pump 27, thereby cooling the motor 6. This portion of the lubricating oil having been used for the cooling moves downward owing to gravity so as to pool on the lower side of the housing 8, and then is accumulated in the lubricating oil accumulating portion 10, which communicates with the lower side of the housing 8. The remaining portion of the lubricating oil not having been used for cooling the motor 6 is introduced into the speed reducer 7 by the centrifugal force and the pressure of the pump 27, thereby lubricating and cooling various portions in the speed reducer 7. This remaining portion of the lubricating oil having been used for the lubrication and the like moves downward owing to gravity and is accumulated in the lubricating oil accumulating portion 10 through an oil discharge port not shown.

### <Control System>

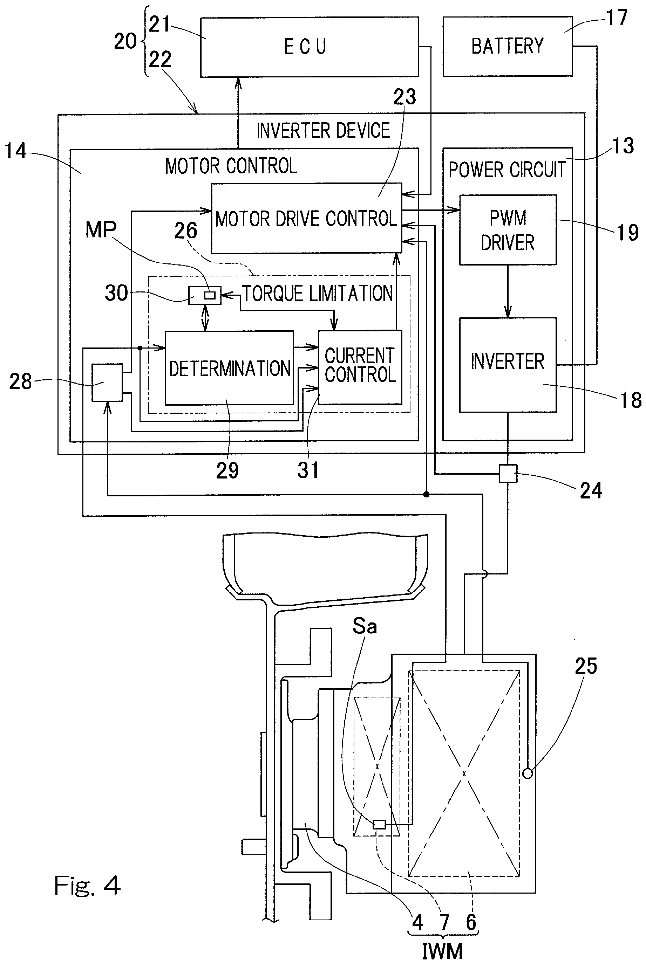

Fig. 4 is a block diagram of a control system of a drive control device 20 for controlling the motor 6. The following description will be made with reference also to Fig. 1, where appropriate.

The drive control device 20 includes an ECU 21 and an inverter device 22. The ECU 21 and the inverter device 22 are mounted in the vehicle body 1 (Fig. 1) of the electric vehicle. The ECU 21 is a higher-order control means that performs integrated control on the entire automobile and that gives a command to the inverter device 22. The ECU 21 and the inverter device 22 are mutually connected via a control area network (CAN) or the like.

Although Fig. 4 shows only one inverter device 22, the inverter device 22 is mounted to each motor 6. Each inverter device 22 controls the corresponding traction motor 6 in accordance with a command from the ECU 21. The ECU 21 is implemented by a microcomputer, a control program to be executed by the microcomputer, various electronic circuits, and the like.

Each inverter device 22 includes a power circuit unit 13 provided for the corresponding motor 6, and a motor control unit 14 for controlling the power circuit unit 13. A single motor control unit 14 may be shared by all of the power circuit units 13. Alternatively, a plurality of the motor control units 14 may be separately provided to the respective power circuit units 13. Even in a case where a single motor control unit 14 is shared, the motor control unit 14 can independently control the power circuit units 13 such that motor torques differ thereamong, for example. The motor control unit 14 retains various kinds of information about the corresponding in-wheel motor drive device IWM, such as detected values and/or control values. The motor control unit 14 outputs these kinds of information to the ECU 21.

The power circuit unit 13 includes an inverter 18 for converting DC power of a battery 17 into three-phase AC power for use in driving the electric motor 6, and a PWM driver 19 for controlling the inverter 18. The motor 6 is implemented by a three-phase synchronous motor. The inverter 18 includes a plurality of semiconductor switching elements (not shown). The PWM driver 19 performs pulse width modulation on an inputted voltage command, and gives an ON/OFF command to each of the semiconductor switching elements.

The motor control unit 14 is implemented by a computer, a program to be executed by the computer, and an electronic circuit. The motor control unit 14 includes a motor drive control module 23 as a basic control section thereof. The motor drive control module 23 converts, into a current command, an acceleration/deceleration command value that is a torque command, etc., which has been supplied from a command torque calculation module 21a (Fig. 1) of the ECU 21. The motor drive control module 23 also performs current feedback control by obtaining, from a current detection device 24, the value of motor current that is caused to flow in the motor 6 by the inverter 18. The motor drive control module 23 calculates a voltage command through the current feedback control, and supplies the voltage command to the PWM driver 19 of the power circuit unit 13. The motor drive control module 23 also performs vector control by obtaining the rotation angle of the rotor 6a (Fig. 2) of the motor 6 from an angle sensor 25.

In this embodiment, the motor control unit 14 includes a torque limitation module 26 described later, and a rotation speed detection module 28 for detecting the rotation speed of the motor 6 through, for example, differentiation of the rotation angle obtained from the angle sensor 25. The lubricating oil accumulating portion 10 (Fig. 2) includes an oil temperature acquisition device (an oil temperature sensor) Sa for directly sensing the temperature of lubricating oil (oil temperature). The oil temperature acquisition device Sa is, for example, a thermistor or the like. When the oil temperature obtained by the oil temperature acquisition device Sa is equal to or lower than a predetermined temperature, the torque limitation module 26 limits the torque of the motor 6 or the torque to be generated in the motor 6 in accordance with a predetermined condition on the basis of the oil temperature and the rotation speed.

The torque limitation module 26 includes a determination section 29, a storage section 30, and a current control section 31. From the time when a power supply of the vehicle is turned on, the determination section 29 constantly determines whether or not the oil temperature detected by the oil temperature acquisition device Sa is equal to or lower than the predetermined temperature (threshold value). The phrase "equal to or lower than the predetermined temperature (threshold value)" refers to, for example, a low temperature such as a temperature equal to or lower than -1°C. However, the "predetermined temperature" is not limited to a fixed temperature such as -1°C, but may be determined, as appropriate, with use of, as a reference, a temperature at which an abnormality such as excessive wear occurs on the speed reducer 7 or the bearing 4 (Fig. 1) of the in-wheel motor drive device IWM, through an experiment, a simulation, or the like. The predetermined temperature (threshold value) is stored in the storage section 30 in a rewritable manner, and is read out at the time of the determination by the determination section 29 and used in the determination. The phrase "constantly determines" encompasses, for example, periodical determination at a predetermined interval (for example, very short time interval).

When the oil temperature is determined to be equal to or lower than the threshold value by the determination section 29, the current control section 31 searches a map Mp to extract a limited torque value for the oil temperature and the rotation speed. The current control section 31 then supplies a command to the power circuit unit 13 via the motor drive control module 23 so as to reduce a current value to the motor 6 in accordance with the limited torque value. The map Mp is a torque command limitation map, which is stored in the storage section 30 in a rewritable manner. An example of the torque command limitation map is shown in Table 1.

### [Table 1]

**Table 1 Torque command limitation map (unit: %)**

| | | Number of rotations (min⁻¹) | | | | | | | | | | |
|---|---|---|---|---|---|---|---|---|---|---|---|---|
| | | 0 | 1000 | 2000 | 3000 | 4000 | 5000 | 6000 | 7000 | 8000 | 9000 | 10000 |
| Temperature (°C) | -40 | 60 | 50 | 40 | 30 | 0 | 0 | 0 | 0 | 0 | 0 | 0 |
| | -30 | 70 | 60 | 50 | 40 | 30 | 30 | 0 | 0 | 0 | 0 | 0 |
| | -20 | 80 | 70 | 60 | 50 | 40 | 30 | 30 | 30 | 0 | 0 | 0 |
| | -10 | 90 | 90 | 90 | 90 | 90 | 90 | 90 | 80 | 70 | 60 | 50 |
| | 0 | 100 | 100 | 100 | 100 | 100 | 100 | 100 | 100 | 100 | 100 | 100 |

In Table 1, a plurality of stepwise magnitudes of the number of rotations are indicated in columns, and a plurality of stepwise values of the temperature are indicated in rows. Each of numerical values at respective intersection cells in Table 1 represents, in a percentage, a proportion relative to a maximum torque for the motor. The maximum torque is multiplied by the numerical value, i.e., the proportion, thereby calculating a limited torque value. The limited torque value with respect to the same number of rotations becomes smaller, that is, the limitation on a command torque becomes larger as the detected oil temperature becomes lower. Therefore, the current value to the motor is smaller for lower oil temperature with respect to the same command torque.

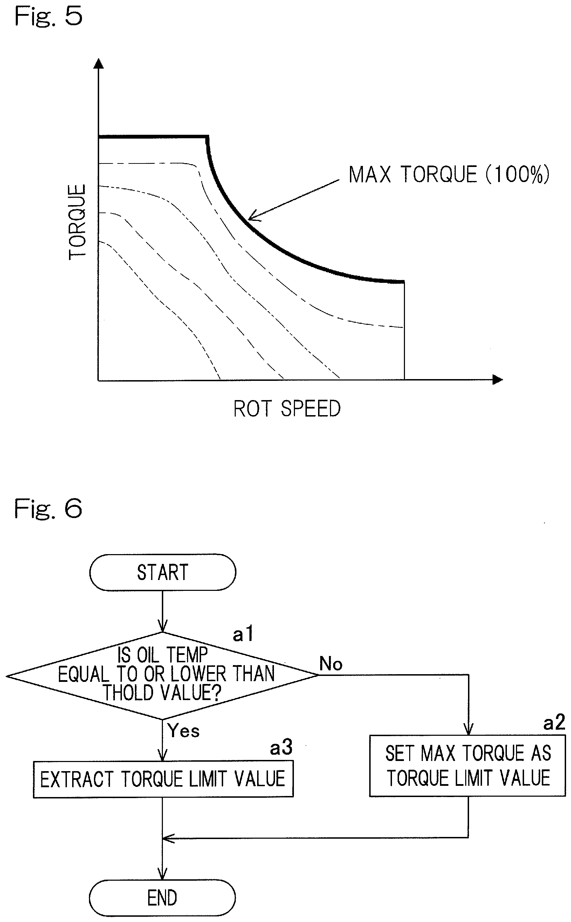

Fig. 5 is a graph indicating the relationship between the torque and the rotation speed of the motor of the electric vehicle. The thick solid line in Fig. 5 indicates the torque of the motor being 100%, i.e., the maximum torque. As shown in Fig. 4 and Fig. 5, in a case where the detected oil temperature is, for example, equal to or higher than 0°C (see Table 1), the torque of the motor 6 is not limited, and thus the motor drive control module 23 provides a current command to the power circuit unit 13 in accordance with a torque command supplied from the ECU 21.

In a case where the detected oil temperature is, for example, -10°C, the current control section 31 provides a command of a motor torque that is not less than 50% and not greater than 90% of the maximum torque and that is dependent on the number of rotations (rotation speed) of the motor, via the motor drive control module 23 to the power circuit unit 13. When, for example, the oil temperature is -10°C and the rotation speed of the motor is 7000 min⁻¹, the current control section 31 provides a command via the motor drive control module 23 to the power circuit unit 13 such that the motor torque does not exceed 80% of the maximum torque at most.

Fig. 6 is a flowchart indicating a process by the drive control device. The flowchart indicates an example where limited torque values are separately set for the motors 6 and 6 (Fig. 1) corresponding to the respective left and right drive wheels 2 and 2 (Fig. 1). Description will be made with reference also to Fig. 4.

For example, after a power supply (not shown) of the vehicle is turned on, this process is started, and the determination section 29 determines whether or not the oil temperature is equal to or lower than the threshold value (step a1). If the oil temperature is determined to be higher than the threshold value (step a1; No), the torque limitation module 26 sets the maximum torque as the limited torque value (step a2). Thereafter, this process is ended.

If the oil temperature is determined to be equal to or lower than the threshold value (step a1; Yes), the torque limitation module 26 searches the map Mp to extract a limited torque value for the oil temperature and the rotation speed of the motor (step a3). The current control section 31 provides a command via the motor drive control module 23 to the power circuit unit 13 to reduce the current value while the extracted limited torque value is maximum. Thereafter, this process is ended.

### <Effects>

In the drive control device 20 described above, if the oil temperature is determined to be equal to or lower than the threshold value, the torque limitation module 26 limits the torque of the motor 6 on the basis of the detected oil temperature and the detected rotation speed of the motor 6. By thus limiting the torque of the motor 6 in consideration not only of the oil temperature but also of the rotation speed of the motor, the following effects are obtained. When the temperature is low, i.e., when the viscosity of the lubricating oil is high, if the rotation speed of the motor 6 is undesirably increasing, the limited torque value can be made small so that increase in the rotation speed of the motor can be suppressed. In this way, a problem such as excessive wear can be prevented from occurring on the speed reducer or the like. In addition, since the torque of the motor 6 is limited finely in accordance with the magnitude of the rotation speed of the motor, the minimal necessary acceleration performance and upslope-running performance can be ensured.

The in-wheel motor drive device IWM is at least partially exposed to the outside of the vehicle and is close to the ground. As such, the in-wheel motor drive device IWM is used under severer condition, and thus the oil temperature more easily becomes low, than in a motor drive device of a so-called on-board type. Even in a vehicle including such in-wheel motor drive devices IWM, a problem such as excessive wear can be prevented from occurring on the speed reducer or the like by limiting the torque of the motor 6 in accordance with the oil temperature and the rotation speed of the motor. Also, the minimal necessary acceleration performance and upslope-running performance can be ensured.

### <Other Embodiments>

In the following description, parts corresponding to the matters described in the preceding embodiment are denoted by the same reference numerals, and the redundant description thereof is omitted. When only a part of a configuration is described, the remaining part of the configuration is the same as that described in the preceding embodiment, unless otherwise specified. The same advantageous effects are achieved by the same configuration. A combination of parts that are specifically described in the embodiments can be implemented, and, further, the embodiments may be partially combined unless such combination causes any problem.

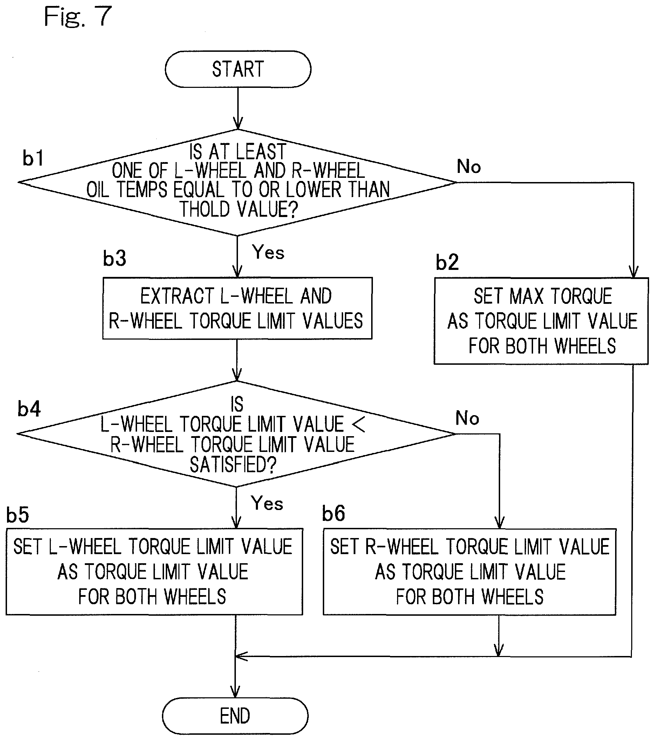

A drive control device according to a second embodiment and a process by the drive control device will be described as follows with reference to Fig. 4. The torque limitation module 26 may extract limited torque values on the left and right, and set, as a limited torque value for both of the motors 6 and 6 for respective left and right wheels 2 and 2, a limited torque value that is smaller between the limited torque values for the motors 6 and 6 for these respective left and right drive wheels 2 and 2 (Fig. 1). Specifically, as shown in Fig. 4 and Fig. 7, the determination section 29 determines whether or not at least one of the oil temperatures detected by the oil temperature acquisition device Sa for the left and right wheels 2 and 2 is equal to or lower than the threshold value (step b1). If both oil temperatures are determined to be higher than the threshold value (step b1; No), the torque limitation module 26 sets the maximum torque as the limited torque value for both wheels (step b2). Thereafter, this process is ended.

If the determination section 29 determines that at least one of the oil temperatures is equal to or lower than the threshold value (step b1; Yes), the torque limitation module 26 searches the map Mp to extract a limited torque value for the oil temperature and the rotation speed of each of the motors for the left or right wheel (step b3). The torque limitation module 26 then determines whether or not the extracted limited torque value for the motor for the right wheel (hereinafter, referred to simply as "right-wheel limited torque value") is larger than the extracted limited torque value for the motor for the left wheel (hereinafter, referred to simply as "left-wheel limited torque value") (step b4). That is, the magnitudes of these limited torque values are compared with each other. If the right-wheel limited torque value is larger than the left-wheel limited torque value (step b4; Yes), the torque limitation module 26 sets, as the limited torque value for both wheels, the left-wheel limited torque value, which is the lower limited torque value (step b5). If the right-wheel limited torque value is equal to or smaller than the left-wheel limited torque value (step b4; No), the torque limitation module 26 sets, as the limited torque value for both wheels, the right-wheel limited torque value, which is the lower limited torque value (step b6). Thereafter, this process is ended.

In this configuration, the torque limitation module 26 extracts left-wheel and right-wheel limited torque values and sets, as a limited torque value for both left and right wheels, a limited torque value that is smaller between the left-wheel and right-wheel limited torque values. As such, no difference is generated between torques that are to be applied to the left and right wheels of the vehicle, whereby the straight-running stability and the like of the vehicle is improved.

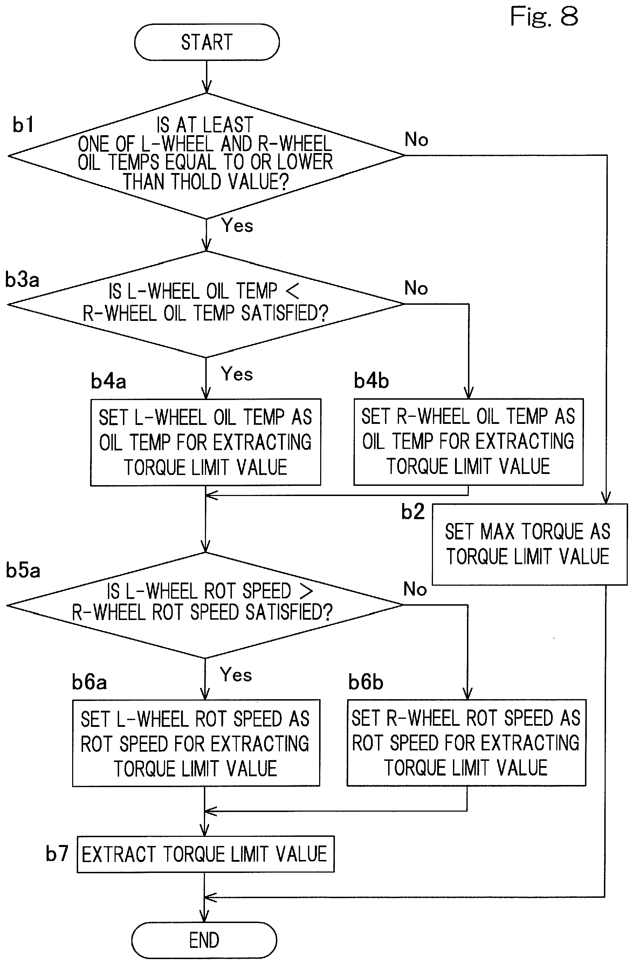

A drive control device according to a third embodiment and a process by the drive control device will be described as follows with reference to Fig. 4. The torque limitation module 26 may extract a limited torque value on the basis of: an oil temperature that is lower between oil temperatures respectively sensed by the oil temperature acquisition devices Sa for the respective left and right wheels (hereinafter, referred to simply as "left-wheel oil temperature" and "right-wheel oil temperature", respectively); and a rotation speed that is higher between rotation speeds respectively detected by the rotation speed detection modules 28 for the respective left and right wheel (hereinafter, referred to simply as "left-wheel rotation speed" and "right-wheel rotation speed", respectively). Specifically, as shown in Fig. 4 and Fig. 8, if at least one of the left-wheel and right-wheel oil temperatures is determined to be equal to or lower than the threshold value (step b1; Yes), the torque limitation module 26 determines whether or not the right-wheel oil temperature is higher than the left-wheel oil temperature (step b3a).

If the right-wheel oil temperature is higher than the left-wheel oil temperature (step b3a; Yes), the torque limitation module 26 sets the left-wheel oil temperature, which is the lower oil temperature, as an oil temperature for extracting a limited torque value (step b4a). If the right-wheel oil temperature is equal to or lower than the left-wheel oil temperature (step b3a; No), the torque limitation module 26 sets the right-wheel oil temperature, which is the lower oil temperature, as the oil temperature for extracting a limited torque value (step b4b).

The torque limitation module 26 then determines whether or not the left-wheel rotation speed is higher than the right-wheel rotation speed (step b5a). If the left-wheel rotation speed is higher than the right-wheel rotation speed (step b5a; Yes), the torque limitation module 26 sets the left-wheel rotation speed, which is the higher rotation speed, as a rotation speed for extracting a limited torque value (step b6a). If the left-wheel rotation speed is equal to or lower than the right-wheel rotation speed (step b5a; No), the torque limitation module 26 sets the right-wheel rotation speed, which is the higher rotation speed, as the rotation speed for extracting a limited torque value (step b6b). Then, the torque limitation module 26 extracts, from the map Mp, a limited torque value for the lower oil temperature and the higher rotation speed, which have been set (step b7). Thereafter, this process is ended.

In this configuration, the extraction of the limited torque value is simplified, which reduces an arithmetic processing load on the drive control device 20.

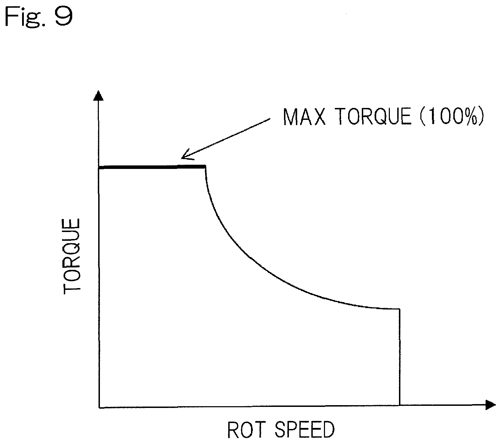

As shown in Fig. 9, only a thick solid line portion with high torque in a low-rotation-speed region may be used as the maximum torque (100%). In this case, a torque command limitation map has to be made such that a value obtained by multiplying a command torque by a percentage extracted from the map does not exceed a curve (maximum output curve) in Fig. 5. That is, the curve in Fig. 5 needs to be taken into account for the map.

The in-wheel motor drive device may include a cycloidal speed reducer, a planetary speed reducer, a speed reducer with two parallel shafts, or another speed reducer. In addition, although rear-wheel drive is described in the in-wheel motor drive device of each of the aforementioned embodiments, front-wheel drive or four-wheel drive may be employed.

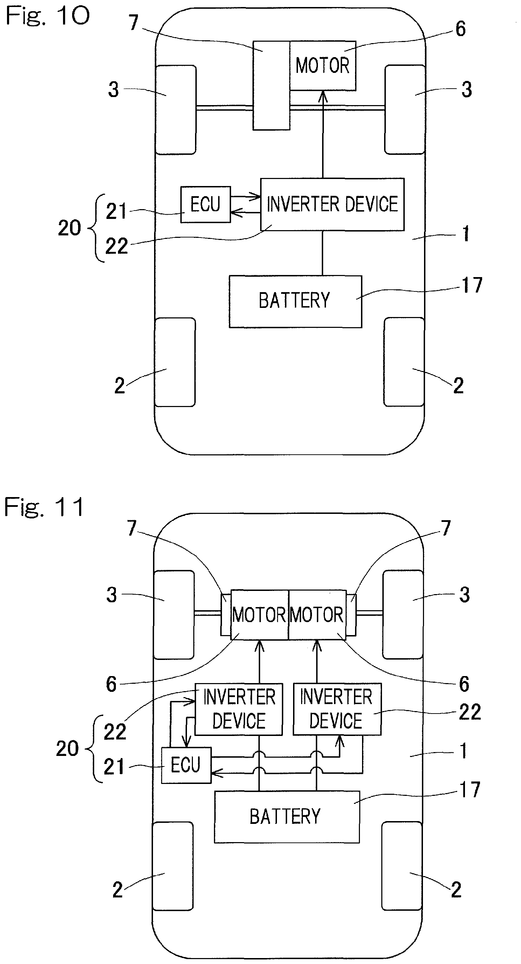

In each of the aforementioned embodiments, an example where the drive control device is used for the electric vehicle including the in-wheel motor drive devices, has been described. Alternatively, as shown in Fig. 10, the drive control device 20 may be used for an electric vehicle of a single-motor type in which a single motor 6 and a single speed reducer 7 are provided to the vehicle body 1 and the left and right wheels 3 and 3 are driven by the single motor 6.

As shown in Fig. 11, the drive control device 20 may be used for an electric vehicle of a two-motor onboard type, in which two motors 6 and 6 and speed reducers 7 and 7 corresponding to the respective motors 6 are provided in the vehicle body 1 and the left and right wheels 3 and 3 are driven by the respective motors 6 and 6. In Fig. 10 and Fig. 11, the left and right wheels driven by the motors 6 may be front or rear wheels 3 or 2. Alternatively, four-wheel drive may be employed.

Although the oil temperature is directly detected in each of the embodiments described above, the oil temperature can also be indirectly estimated from a motor temperature. For example, after the temperature of the stator 6b (Fig. 2), the housing 8 (Fig. 2), or the like of the motor 6 is detected, the oil temperature can be estimated in accordance with a predetermined relationship on the basis of the detected motor temperature. The predetermined relationship between the oil temperature and the motor temperature is determined through, for example, an experiment and/or a simulation.

Implementing the process by the drive control device according to any of the embodiments brings about the following effects. In a case where the vehicle is running on a flat road, an upslope, or a gentle downslope, the torque is reduced as the rotation speed of the motor increases, and the torque ultimately becomes zero, whereby increase in the rotation speed of the motor can be suppressed. Meanwhile, in a case where the vehicle is running on a steep downslope, the rotation speed of the motor could undesirably increase. Giving a braking command from the ECU 21 (Fig. 4) to a brake controller (not shown) suppresses such increase in the rotation speed of the motor. In this way, loads on the speed reducer and the like at low temperature can be reduced.

Although the modes for carrying out the present invention have been described on the basis of the embodiments, the embodiments disclosed herein are illustrative in all aspects and not restrictive. The scope of the present invention is indicated not by the above description but by the claims, and is intended to include any modifications within the scope and meaning equivalent to the claims.

### [Reference Numerals]

- 2, 3: wheel
- 6: motor
- 20: drive control device
- 26: torque limitation module
- 28: rotation speed detection module
- Jk: oil supply mechanism
- Sa: oil temperature acquisition device

## Claims

1. A drive control device for controlling a motor of a vehicle, the vehicle including
the motor for driving the vehicle,
a speed reducer for reducing a speed of rotation of the motor to transmit the reduced rotation to a wheel, and
an oil supply mechanism for suppling lubricating oil to the motor and the speed reducer,
the drive control device comprising:
an oil temperature sensor configured to obtain a temperature of the lubricating oil;
a rotation speed detection module configured to detect a rotation speed of the motor; and
a torque limitation module configured to limit a torque to be generated in the motor, based on the oil temperature obtained by the oil temperature sensor and the rotation speed of the motor detected by the rotation speed detection module, when the oil temperature obtained by the oil temperature sensor is equal to or lower than a predetermined temperature.

2. The drive control device as claimed in claim 1, the drive control device further comprising
a storage section configured to store a map in which a value related to limitation on the torque to be generated in the motor is set with respect to an oil temperature and a rotation speed, wherein
the torque limitation module extracts, from the map, a limited torque value for the oil temperature obtained by the oil temperature sensor and the rotation speed of the motor detected by the rotation speed detection module, the limited torque value limiting the torque to be generated in the motor.

3. The drive control device as claimed in claim 1 or 2, wherein
the motor, a wheel bearing rotationally supporting the wheel, and the speed reducer for reducing the speed of the rotation of the motor to transmit the reduced rotation to the wheel bearing form an in-wheel motor drive device.

4. A drive control system including two or more drive control devices each of which is claimed in any one of claims 1 to 3,
the vehicle being mounted with the two or more drive control devices, in the vehicle left and right wheels being driven independently, wherein
the two or more drive control devices share, or separately have, the torque limitation module, and
the shared torque limitation module or at least one of the separate torque limitation module
extracts limited torque values, the limited torque values limiting the torques to be generated in the respective motors for left and right drive wheels, and
sets a limited torque value that is smaller between the limited torque values, as a limited torque value for both motors for the respective left and right drive wheels.

5. A drive control system including two or more drive control devices each of which is claimed in any one of claims 1 to 3,
the vehicle being mounted with the two or more drive control devices, in the vehicle left and right wheels being driven independently, wherein
the two or more drive control devices share, or separately have, the torque limitation module, and
the shared torque limitation module or at least one of the separate torque limitation module
extracts a limited torque value for
an oil temperature that is lower between oil temperatures obtained by the respective oil temperature sensors of the drive control devices on the left and right, and
a rotation speed that is higher between rotation speeds detected by the respective rotation speed detection modules of the drive control devices on the left and right, and
sets the extracted limited torque value as a limited torque value for both motors for respective left and right drive wheels.
